Europäisches Patentamt

European Patent Office

Office européen des brevets

(19)

(11) Veröffentlichungsnummer: **0 228 508 B1**

## EUROPÄISCHE PATENTSCHRIFT

(12)

(45) Veröffentlichungstag der Patentschrift: **28.08.91**

(51) Int. Cl.⁵: **G12B** 11/00, G01D 11/28

(21) Anmeldenummer: **86112531.8**

(22) Anmeldetag: **10.09.86**

(54) Beleuchtungseinrichtung für eine Frontplatte.

(30) Priorität: **08.10.85 DE 3535881**

(43) Veröffentlichungstag der Anmeldung:
**15.07.87 Patentblatt 87/29**

(45) Bekanntmachung des Hinweises auf die
Patenterteilung:
**28.08.91 Patentblatt 91/35**

(84) Benannte Vertragsstaaten:
**FR GB IT SE**

(56) Entgegenhaltungen:
**EP-A- 0 075 304**
**EP-A- 0 129 662**
**GB-A- 2 032 088**
**US-A- 4 252 078**
**US-A- 4 300 548**

(73) Patentinhaber: **Preh-Werke GmbH & Co. KG**
**Postfach 1740 An der Stadthalle**
**W-8740 Bad Neustadt/Saale(DE)**

(72) Erfinder: **Bauer, Karl-Heinz**
**Lerchenstrasse 9**
**W-8740 Bad Neustadt/Saale(DE)**
Erfinder: **Eckert, Gerold**
**Am Bersbach 16**
**W-8740 Bad Neustadt/S.(DE)**
Erfinder: **Maidhof, Rüdiger**
**Altenbergstrasse 6**
**W-8740 Bad Neustadt/S.(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Beleuchtungseinrichtung für eine Frontplatte mit einem Drehknopf und mit Leuchtfeldern, die von einer Lampe über hinter der Frontplatte angeordnete Lichtleiter beleuchtet sind, wobei die Lampe in einem Anschlußsockel gehalten und über diesen elektrisch angeschlossen ist.

Derartige Beleuchtungseinrichtungen werden beispielsweise bei Frontplatten eingesetzt, deren Leuchtfelder der Beleuchtung oder Anzeige dienen. Häufig weisen solche Frontplatten Bedienelemente auf. Die Leuchtfelder können dann die jeweilige Stellung des Bedienteils signalisieren. Beispielsweise werden solche Beleuchtungseinrichtungen bei Frontplatten von Kraftfahrzeugbedienaggregaten, wie beispielsweise deren Lüftungs- bzw. Klimaanlage eingesetzt. Sie können auch bei Geräten der Unterhaltungselektronik verwendet werden (vgl. E.P.A.0129662 die der DE-A-15 33 17 807)-entspricht.

Bei den bekannten Beleuchtungseinrichtungen der genannten Art ist die Lampe, wenn sie defekt ist, in der Praxis nur schwer ausbaubar, da sie an unzulänglicher Stelle hinter der Frontplatte sitzt. Die Lampe kann deshalb vom Benutzer kaum und vom Fachpersonal nur mit erheblichem Arbeitsaufwand ausgewechselt werden. Andererseits ist es nicht ohne weiteres möglich, die Lampe an einer gut zugänglichen Stelle, fern von den Leuchtfeldern, anzuordnen, da dann die Lichtausnutzung der Lampe verschlechtert wird und die Lampe möglicherweise Streulicht an unerwünschter Stelle abstrahlt.

Aus der US-A-4 300 548 ist ein Zeigerinstrument mit beleuchteter Streuscheibe bekannt. Dabei durchragt die Lampe eine Öffnung der betrachterseitigen Instrumentenabdeckung und mündet mit ihrem Lampenkopf im Zentrum der Streuscheibe. Die Öffnung wird von einem Schraubverschluß überdeckt. Unterhalb des Schraubverschlusses ist der Lampenfuß gehalten und elektrisch versorgt. Mit dem Entfernen des Schraubverschlusses wird die Lampe von außen zugänglich und kann bedarfsweise ausgewechselt werden.

Bei einem anderen Zeigerinstrument (US-A-4 252 078) ist der Anschlußsockel einer Zeigerbeleuchtung als trennbarer Steckteil ausgebildet. Bei einem Defekt wird die Lampe mit dem Anschlußsockel abgezogen und ausgewechselt. Der Anschlußsockel begrenzt den Drehbereich des Zeigers.

Aufgabe der Erfindung ist es, eine Beleuchtungseinrichtung der eingangs genannten Art vorzuschlagen, bei der die Lampe ohne Öffnung, oder Ausbau des Gerätes oder des Aggregates, leicht auswechselbar und ihr Licht gut ausgenutzt ist.

Erfindungsgemäß ist obige Aufgabe bei einer Beleuchtungseinrichtung der eingangs genannten Art dadurch gelöst, daß der Drehknopf eine von einem Grundkörper abnehmbar gehaltene Haube aufweist, unter der der Anschlußsockel so in Richtung der Haube herausnehmbar befestigt ist, daß die Lampe der Haube abgewandt ist und hinter die Frontplatte zu den Lichtleitern ragt. Dadurch ist erreicht, daß nach Abnehmen der Haube der Anschlußsockel und damit auch die Lampe von der Frontplatte her zugänglich sind. Die Lampe läßt sich also nach dem Abnehmen der Haube leicht austauschen. Dadurch, daß die Lampe vom vornliegenden Sockel nach hinten zu den Lichtleitern reicht, gibt sie ihr Licht ziemlich direkt an diese ab, so daß eine gute Lichtausnutzung erreicht ist, zumal im Rückraum der Frontseite ausreichend Freiraum verfügbar ist, um die Anordnung der Lichtleiter zu optimieren. Durch diese Anordnung ist außerdem erreicht, daß die Lampe nicht unerwünscht Streulicht nach vorn abgibt, das mit besonderen Maßnahmen abgeschirmt werden müßte.

Um zu vermeiden, daß beim Abnehmen des Sockels Anschlußdrähte mitgezogen werden, ist in bevorzugter Ausgestaltung der Erfindung zwischen dem Anschlußsockel und den elektrischen Anschlüssen eine Kontakteinrichtung vorgesehen, die sich beim Abnehmen des Anschlußsockels löst. Es kann hierfür beispielsweise eine Steckverbindung oder eine andere einfache Anordnung von Kontaktfedern vorgesehen sein.

Der Anschlußsockel kann unabhängig von der Haube am Grundkörper des Drehknopfes festgelegt sein. Damit ergibt sich, daß der Anschlußsockel nach dem Abnehmen der Haube separat abgenommen werden muß. Um dies zu umgehen, ist in einer Ausgestaltung der Erfindung der Anschlußsockel mit der Kappe vereint. Damit wird nach dem Abnehmen der Haube die Lampe direkt zugänglich.

In der Erfindung ist die Haube als Teil eines Drehknopfes ausgebildet. Dadurch ist erreicht, daß bei Frontplatten, an denen ohnehin Bedienteile vorgesehen sind, eine zusätzliche Haube und deren Befestigung an der Frontplatte entfällt. Es bedeckt dann das bzw. eines der Bedienteile selbst den Anschlußsockel und die Lampe. In diesem Fall wird vorzugsweise die Kontakteinrichtung von Schleifern des Anschlußsockels und kreisförmig verlaufenden Leiterbahnen der elektrischen Anschlüsse gebildet.

Um das Bedienteil zu beleuchten bzw. dessen jeweilige Stellung auch im Dunkeln erkennbar zu machen, ist vorzugsweise in dem Bedienteil ein weiterer Lichtleiter angeordnet, der im Bereich der Oberfläche des Bedienteils endet und von der Lampe beleuchtet ist. In dieser Anordnung ist es von Vorteil, den Anschlußsockel aus transparentem Material zu erstellen und den Lichtleiter einstückig anzuformen.

Weitere vorteilhafte Ausgestaltungen der Erfindung ergeben sich aus der folgenden Beschreibung eines Ausführungsbeispiels und den Unteransprüchen.

Als Zeichnung dargestellt sind in

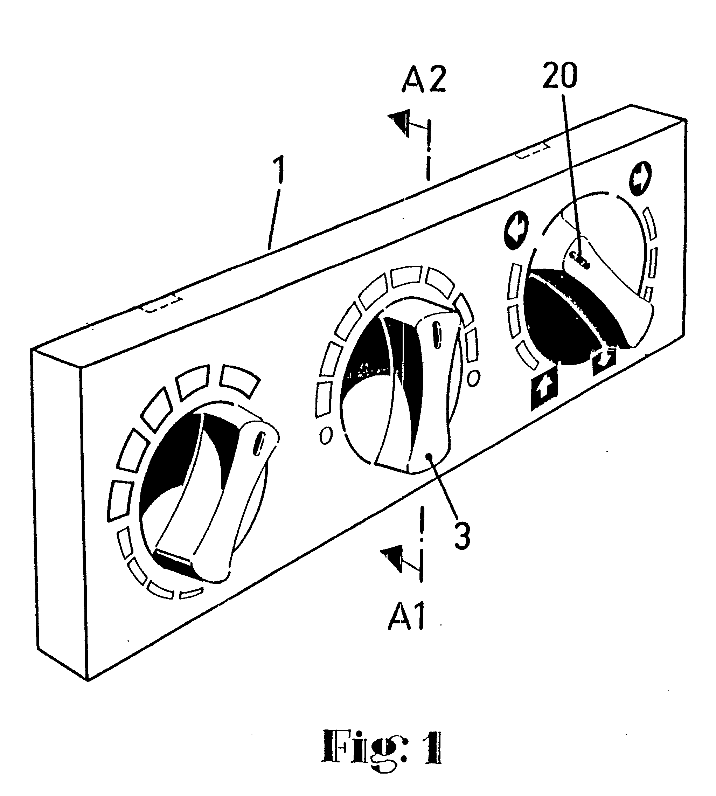

Figur 1    die Vorderansicht einer Frontplatte,

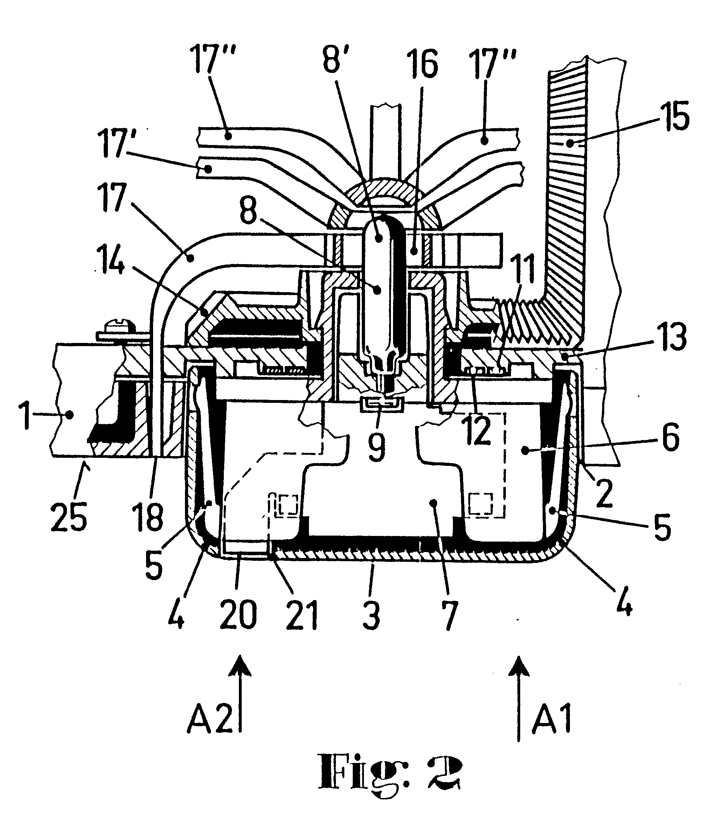

Figur 2    die Schnittdarstellung mit Bedienteil,

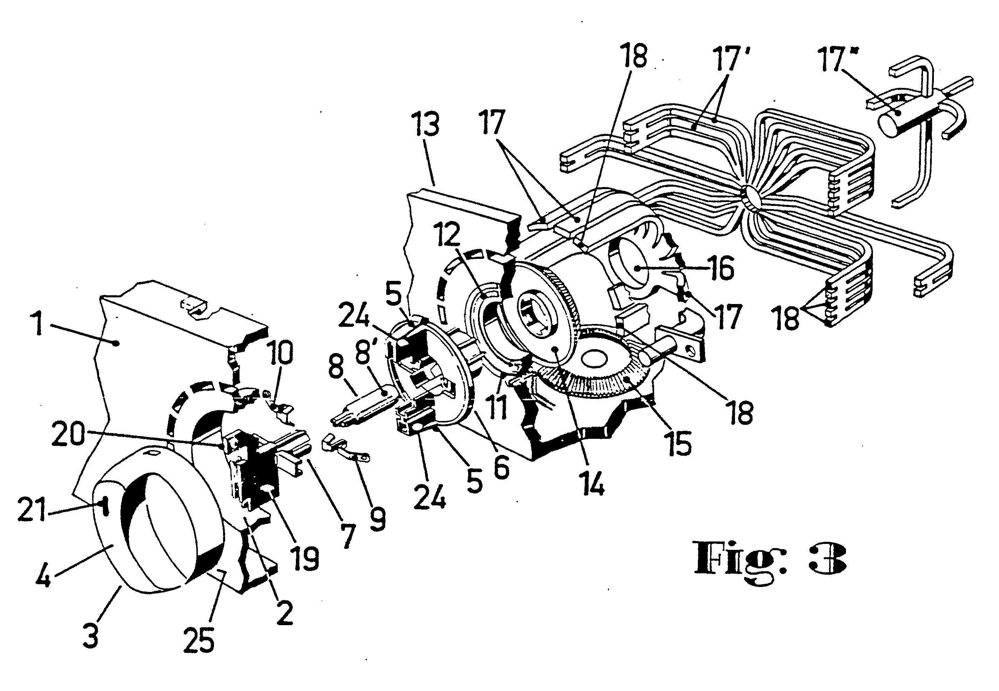

Figur 3    die Schemadarstellung der Beleuchtungseinrichtung mit Bedienteil

und

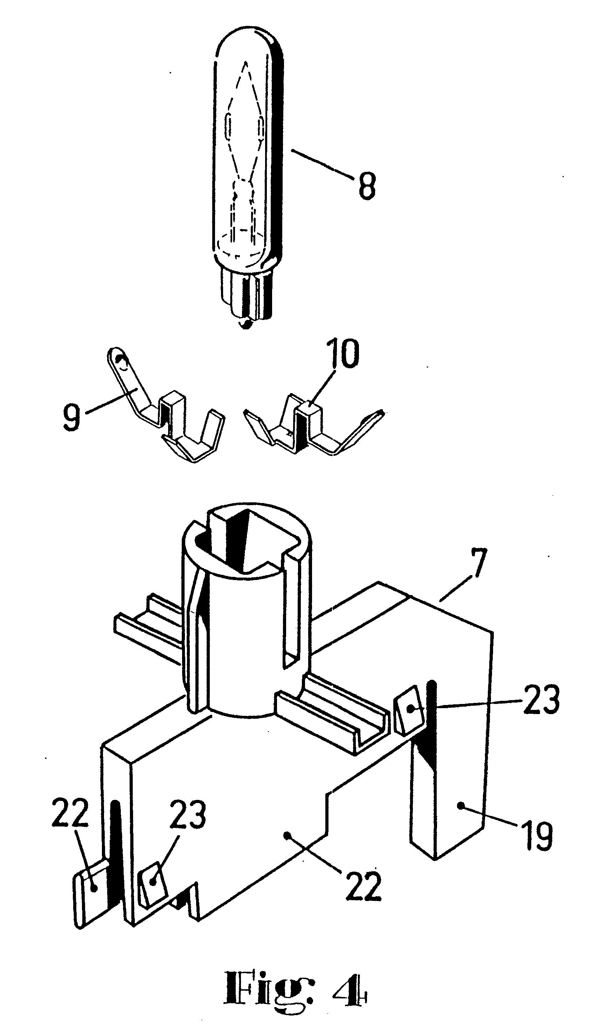

Figur 4    der Anschlußsockel.

Eine Frontplatte 1 weist eine Ausnehmung 2 auf, in der ein Drehknopf 3 sitzt. Der Drehknopf 3 weist eine Haube 4 auf, die auf Federarme 5 eines Drehknopf-Grundkörpers 6 aufgeschnappt ist. In dem Drehknopf-Grundkörper 6 sitzt ein Anschlußsockel 7 fest, in welchem eine Glühlampe 8 eingesetzt ist. Der Anschlußsockel 7 weist Schleifer 9 und 10 auf, die mit jeweils einem Anschlußdraht der Glühlampe 8 in Steckverbindung stehen. Die Schleifer 9 und 10 kontaktieren kreisförmige Leiterbahnen 11 und 12, die auf einer Grundplatte 13 angeordnet sind, auf welcher die Frontplatte 1 sitzt.

Der Anschlußsockel 7 bzw. der Drehknopf-Grundkörper 6 ist drehfest mit einem Kegelrad 14 mit kegelförmiger Verzahnung verbunden, welches auf der der Frontplatte 1 abgewandten Seite der Grundplatte 13 angeordnet ist. Das Kegelrad 14 steht mit einem weiteren Kegelrad 15 im Eingriff, das mit einem Betätigungselement für ein Aggregat verbindbar ist.

Der Kopf 8' der Glühlampe 8 ist der Haube 4 abgewandt. Er ragt hinter die Frontplatte 1 und die Grundplatte 13 in eine Öffnung 16, die Lichtleiter 17 umschließen. Die Lichtleiter 17 sind durch die Grundplatte 13 und die Frontplatte 1 geführt und enden mit einer entsprechend gestalteten Oberfläche 18 an der Sichtseite 25 der Frontplatte 1.

Der Anschlußsockel 7 besteht aus einem transparenten Material. Ihm ist ein Lichtleiter 19 angeformt, welcher mit seiner Oberfläche 20 in einer Durchbrechung 21 der lichtundurchlässigen Haube 4 endet.

Die Funktionsweise der beschriebenen Beleuchtungseinrichtung ist folgende:
Leuchtet die Glühlampe 8, dann sind an der Sichtseite 25 bzw. der Haube 4 die Oberflächen 18 bzw. 20 leuchtend sichtbar.

Wird der Drehknopf 3 verdreht, dann drehen sich dabei der Anschlußsockel 7 mit dem Lichtleiter 19, die Glühlampe 8, die Schleifer 9 und 10, sowie die Kegelräder 14 und 15 mit. Es erfolgt dabei eine entsprechende Verstellung des vom Drehknopf 3 zu betätigenden Aggregats. Die Oberfläche 20 des Lichtleiters 19 macht die Verdrehstellung des Drehknopfes 3 kenntlich. Bei der Drehung erlischt die Glühlampe 8 nicht, da die Schleifer 9 und 10 auf den Leiterbahnen 11 und 12 gleiten.

Ist die Glühlampe 8 defekt, wird die Haube 4 des Drehknopfes 3 von dem Drehknopf-Grundkörper 6 abgezogen. Der somit freigelegte Anschlußsockel 7 wird durch das Zusammendrücken seiner Flanken 22 aus seiner Halterung im Drehknopf-Grundkörper 6 entrastet und diesem entnommen. Das Entrasten geschieht, indem die Rastnasen 23 an den Flanken 22 des Anschlußsockels 7 sich durch die, durch das Zusammendrücken erwirkte Flankenbewegung aus den zusammenwirkenden Halterungselementen 24 des Drehknopf-Grundkörpers 6 ausklinken. Bei der Entnahme des Anschlußsockels 7 lösen sich ohne weiteres die Schleifkontakte 9 und 10 von den Leiterbahnen 11 und 12, so daß der Benutzer nun den Anschlußsockel 7 so verfügbar hat, daß er ohne weiteres die defekte Glühlampe 8 abziehen und eine neue Glühlampe 8 einsetzen kann.

Anschließend wird der Anschlußsockel 7 mit der Glühlampe 8 wieder in die Halterungen 24 des Drehknopf-Grundkörpers 6 gesteckt und eingerastet. Dabei kontaktieren sich die Schleifkontakte 9 und 10 und die Leiterbahnen 11 und 12 von selbst. Mit dem Aufstecken der Haube 4 auf den Drehknopf-Grundkörper 6 ist der Austausch der Glühlampe 8 beendet.

Bezugszeichenliste 04/85 EUR

| | |
|---|---|
| 1 | Frontplatte |
| 2 | Ausnehmung der Frontplatte |
| 3 | Drehknopf |
| 4 | Haube |
| 5 | Federarme |
| 6 | Drehknopf-Grundkörper |
| 7 | Anschlußsockel |
| 8 | Glühlampe |
| 8' | Kopf der Glühlampe |
| 9 | Schleifkontakt |
| 10 | Schleifkontakt |
| 11 | Leiterbahn |
| 12 | Leiterbahn |
| 13 | Grundplatte |
| 14 | Kegelrad |
| 15 | Kegelrad |
| 16 | Öffnung |
| 17,17',17" | Lichtleiter |
| 18 | Lichtleiter-Oberfläche |
| 19 | Lichtleiter |
| 20 | Lichtleiter-Oberfläche |
| 21 | Durchbrechung |
| 22 | Flanken |
| 23 | Rastnasen |
| 24 | Halterungselement |
| 25 | Sichtseite |

**Patentansprüche**

1. Beleuchtungseinrichtung für eine mit wenigstens einem Drehknopf (3) als Stellorgan ausgerüstete Frontplatte (1) mit Leuchtfeldern (18), die von einer Lampe (8) über hinter der Frontplatte (1) angeordnete Lichtleiter (17) beleuchtet sind, wobei die Lampe (8) in einem Anschlußsockel (7) gehalten und über diesen elektrisch angeschlossen ist,
dadurch gekennzeichnet,
daß der Drehknopf (3) eine von einem Grundkörper (6) abnehmbar gehaltene Haube (4) aufweist, unter der der Anschlußsockel (7) so in Richtung der Haube (4) herausnehmbar befestigt ist, daß die Lampe (8) der Haube (4) abgewandt ist und hinter die Frontplatte (1) zu den Lichtleitern (17) ragt.

2. Beleuchtungseinrichtung nach Anspruch 1,
dadurch gekennzeichnet,
daß der Anschlußsockel (7) mittels Rastelementen (23) hilfsmittelfrei lösbar befestigt ist.

3. Beleuchtungseinrichtung nach Anspruch 2,
dadurch gekennzeichnet,
daß die Rastelemente (23) des Anschlußsockels (7) durch ein Zusammendrücken seiner Flanken (22) zu entrasten sind.

4. Beleuchtungseinrichtung nach einem der Ansprüche 1 bis 3,
dadurch gekennzeichnet,
daß das Material des Anschlußsockels (7) lichtleitend ist.

5. Beleuchtungseinrichtung nach einem der Ansprüche 1 bis 4,
dadurch gekennzeichnet,
daß dem Anschlußsockel (7) ein Lichtleiter (19) angeformt ist, dessen Ende (20) an einer Durchbrechung (21) in der Haube (4) z.B. die Drehposition anzeigt.

6. Beleuchtungseinrichtung nach einem der Ansprüche 1 bis 5,
dadurch gekennzeichnet,
daß der Anschlußsockel (7) auf dem Grundkörper (6) zentrisch angeordnet ist.

7. Beleuchtungseinrichtung nach einem der Ansprüche 1 bis 6,
dadurch gekennzeichnet,
daß zwischen dem Anschlußsockel (7) und den elektrischen Anschlüssen eine Kontakteinrichtung (9) bis (12) vorgesehen ist, die sich beim Abnehmen des Anschlußsockels (7, 7') löst.

8. Beleuchtungseinrichtung nach Anspruch 7,
dadurch gekennzeichnet,
daß die Kontakteinrichtung von Schleifern (9, 10) des Anschlußsockels (7) und Leiterbahnen (11, 12) der elektrischen Anschlüsse gebildet ist.

9. Beleuchtungseinrichtung nach einem der Ansprüche 1 bis 8,
dadurch gekennzeichnet,
daß weitere Lichtleiter (17', 17'') angeordnet sind für Leuchtfelder in einer anderen Lichtfärbung.

## Claims

1. An illuminating device for a front plate (1) with luminous fields (18) equipped with at least one rotary button (3) as adjusting organ, said fields being illuminated by a lamp (8) by way of light conductors (17), arranged behind the front plate (1), wherein the lamp (8) is held in a connecting base (7) and is electrically connected by way of this, characterised in that the rotary button (3) has a hood (4), secured so that it can be removed from a base body (6), under which the connecting base (7) is secured so that it can be removed in the direction of the hood (4), so that the lamp (8) faces away from the hood (4) and projects behind the front plate (1) to the light conductors (17).

2. An illuminating device according to claim 1, characterised in that the connecting base (7) is secured by means of locking elements (23) so that it can be easily released without auxiliary means.

3. An illuminating device according to claim 2, characterised in that the locking elements (23) of the connecting base (7) are unlocked by pressing together its edges (22).

4. An illuminating device according to one of claims 1 to 3, characterised in that the material of the connecting base (7) is photo-conductive.

5. An illuminating device according to one of claims 1 to 4, characterised in that a light conductor (19) is preformed on the connecting base (7), the end (20) of which on a perforation (21) in the hood (4) indicates e.g. the rotary position.

6. An illuminating device according to one of claims 1 to 5, characterised in that the connecting base (7) is arranged centrally on the base body (6).

7. An illuminating device according to one of claims 1 to 6, characterised in that between the connecting base (7) and the electric terminals there is provided a contact device (9) to (12), which releases itself when the connecting base (7, 7') is removed.

8. An illuminating device according to claim 7, characterised in that the contact device is formed by sliders (9,10) of the connecting base (7) and conductor paths (11,12) of the electric terminals.

9. An illuminating device according to one of claims 1 to 8, characterised in that further light conductors (17', 17'') are arranged for luminous fields in another light colouration.

**Revendications**

1. Dispositif d'éclairage destiné à un panneau avant (1) qui est équipé d'au moins un bouton (3) rotatif servant d'organe de réglage et qui comporte des champs lumineux (18), éclairés par une ampoule (8), par l'intermédiaire de conducteurs optiques (17) qui sont disposés derrière le panneau avant (1), l'ampoule (8) étant maintenue dans un socle (7) de branchement et raccordée électriquement par l'intermédiaire de celui-ci,

    dispositif caractérisé en ce que le bouton (3) rotatif présente une coiffe (4) susceptible d'être retirée d'un corps (6) de base et sous laquelle le socle (7) de branchement est fixé de façon amovible en direction de la coiffe (4), de façon telle que l'ampoule (8) se trouve à l'opposé de la coiffe (4) et dépasse derrière le panneau avant (1) vers les conducteurs optiques (17).

2. Dispositif d'éclairage selon la revendication 1, caractérisé en ce que le socle (17) de branchement est fixé de façon à pouvoir être détaché, sans recourir à un moyen ou à un autre outil auxiliaire, à l'aide d'éléments (23) d'encliquetage.

3. Dispositif d'éclairage selon la revendication 2, caractérisé en ce que les éléments (23) d'encliquetage du socle (7) de branchement sont à désencliqueter grâce à une compression des flancs (22) de ce socle.

4. Dispositif d'éclairage selon l'une des revendications 1 à 3, caractérisé en ce que le matériau du socle (7) de branchement est optiquement conducteur.

5. Dispositif selon l'une des revendications 1 à 4, caractérisé en ce que, sur le socle (7) de branchement est moulé un conducteur optique (19), dont l'extrémité (20) indique, sur un passage (21) pratiqué dans la coiffe (4), par exemple la position obtenue par rotation.

6. Dispositif selon l'une des revendications 1 à 5, caractérisé en ce que le socle (7) de branchement est disposé de façon centrée sur le corps (6) de base.

7. Dispositif selon l'une des revendications 1 à 6, caractérisé en ce qu'entre le socle (7) de branchement et les branchements électriques est prévu un dispositif (9 à 12) de contact qui se détache lorsque l'on retire le socle (7, 7') de branchement.

8. Dispositif d'éclairage selon la revendication 7, caractérisé en ce que le dispositif de contact est formé par les balais frotteurs (9, 10) du socle (7) de branchement et des pistes conductrices (11, 12) du raccordement électrique.

9. Dispositif d'éclairage selon l'une des revendications 1 à 8, caractérisé en ce que d'autres conducteurs optiques (17', 17'') sont disposés pour des champs éclairés en une autre couleur de lumière.

**Fig: 1**

**Fig: 2**

**Fig. 3**

**Fig. 4**